# EUROPEAN PATENT APPLICATION

(11) **EP 2 911 368 A1**
(43) Date of publication of application: **26.08.2015**
(21) Application number: 13846344.3
(22) Date of filing: 11.10.2013
(51) Int. Cl.: H04M 1/00, H04W 52/02

(54) **COMMUNICATION TERMINAL, COMMUNICATION SYSTEM, METHOD FOR CONTROLLING COMMUNICATION TERMINAL, AND PROGRAM**

(30) Priority: 16.10.2012 JP 2012228799
(71) Applicant: NEC Corporation, Tokyo 108-8001 (JP)
(72) Inventor: IWAMOTO, Masanao, Kawasaki-shi Kanagawa 211-8666 (JP)
(74) Representative: Vossius & Partner Patentanwälte Rechtsanwälte mbB
(86) International application number: PCT/JP2013/077805
(87) International publication number: WO 2014/061600

(57) **Abstract**

The purpose of the present invention is to contribute to while receiving necessary information for user, and minimizing unnecessary communication with a base station. A communication terminal comprises: a base station master communication unit that communicates with the base station; a master terminal communication unit that communicates with a slave communication terminal; a communication terminal determination unit that determines whether a communication between the slave communication terminal and the base station is allowed or not, according to notification information that the base station master communication unit receives from the base station; and a communication instruction unit that instructs to the slave communication terminal to perform a communication between the slave communication terminal and the base station, when the communication terminal determination unit determines that the slave communication terminal and the base station communicate.

## Description

### TECHNICAL FIELD

### (REFERENCE TO RELATED APPLICATION)

The present invention is based upon and claims the benefit of the priority of Japanese patent application No.2012-228799, filed on October 16, 2012, the disclosure of which is incorporated herein in its entirety by reference thereto.

The present invention relates to a communication terminal, a communication system, a method for controlling a communication terminal, and a program.

### BACKGROUND

In recent year, many users use a plurality of communication devices. Such user sometimes uses a different communication device according to their purposes. For example, the user uses different communication terminals respectively for talking or receiving a mail.

Patent Literature 1 discloses a communication device that, when the communication device received stop information to stop a communication function, transmits the received stop information to the communication device on the other side of a communication.

Patent Literature 2 discloses a mobile radio terminal control system that switches a manner mode or a stop state of transmission of a radio wave in a restrict area of using a mobile radio terminal.

### CITATION LIST

### PATENT LITERATURE

[Patent Literature 1]
   Japanese Patent Kokai Publication No.2011-151585A
[Patent Literature 2]
   Japanese Patent Kokai Publication No.2004-040642A

### SUMMARY

### TECHNICAL PROBLEM

The disclosure of each of the above Patent Literatures is incorporated herein by reference thereto. The following analysis has been given by the present invention.

As described above, a user sometimes uses one out of a plurality of communication terminals according to their purposes. For example, let's assume a case where a user uses different communication terminals respectively for talking or using a mail. In this case, necessity that the communication terminal for talking receives a mail from a base station is low. However, there are much cases where a communication terminal keeps communicating with the base station. Therefore, a communication terminal often communicates with the base station, in order to receive duplicate information with information that is received by other communication devices. As a result, the communication terminal sometimes consumes electric power for receiving unnecessary information. Namely, when a user possesses a plurality of communication terminals, each communication terminal sometimes consumes the electric power in vain.

The technique disclosed in Patent Literature 1 can set a plurality of communication terminal to be an OFF state of transmission of a radio wave. However, the technique disclosed in Patent Literature 1 cannot prevent from receiving duplicate information with information received by other communication terminal. Therefore, the technique disclosed in Patent Literature 1 cannot prevent from consuming an electric power based on unnecessary communication with a base station.

In the technique disclosed in Patent Literature 2, it is necessary that a user moves bringing both a communication terminal of a control target and another communication terminal that controls transmitting and receiving a radio wave from the communication terminal of the control target. Also, the technique disclosed in Patent Literature 2 cannot control transmitting and receiving a radio wave from a communication terminal according to a function(s) of the communication terminal.

Therefore, it is desired to provide a communication terminal, a communication system, a method for controlling a communication terminal, and a program that contribute to minimizing unnecessary communication with a base station while receiving necessary information for a user.

### SOLUTION TO PROBLEM

According to a first aspect, there is provided a communication terminal, comprising: a base station master communication unit that communicates with a base station; a master terminal communication unit that communicates with a slave communication terminal; a communication terminal determination unit that determines whether a communication between the slave communication terminal and the base station is allowed or not, according to notification information that the base station master communication unit receives from the base station; and a communication instruction unit that instructs to the slave communication terminal to perform a communication between the slave communication terminal and the base station, when the communication terminal determination unit determines that the slave communication terminal and the base station communicate.

According to a second aspect, there is provided a communication terminal, comprising: a base station slave communication unit that communicates with a base station; a slave terminal communication unit that communicates with a master communication terminal; and a base station communication control unit that starts the communication with the base station, when an instruction of a communication between the communication terminal and the base station is received.

According to a third aspect, there is provided a communication system, comprising: a master communication terminal; a slave communication terminal; wherein the master communication terminal comprises: a base station master communication unit that communicates with the base station; a master terminal communication unit that communicates with a slave communication terminal; a communication terminal determination unit that determines whether a communication between the slave communication terminal and the base station is allowed or not, according to notification information that the base station master communication unit receives from the base station; and a communication instruction unit that instructs to the slave communication terminal to perform a communication between the slave communication terminal and the base station, when the communication terminal determination unit determines that the slave communication terminal and the base station communicate; and, wherein
the slave communication terminal, comprises: a base station slave communication unit that communicates with a base station; a slave terminal communication unit that communicates with a master communication terminal; a base station communication control unit that instructs the base station slave communication unit to start the communication with the base station, when an instruction of a between the slave communication terminal and the base station is received from the master communication terminal.

According to a fourth aspect, there is provided a method for controlling communication terminal, comprising: communicating with a base station; communicating with a slave communication terminal; determining whether a communication between the slave communication terminal and the base station is allowed or not, according to notification information received from the base station; instructing to the slave communication terminal to perform a communication between the slave communication terminal and the base station, when it is determined that the slave communication terminal and the base station communicate. This method is associated with a certain machine(s), namely, with a communication terminal communicating with a base station and a communication terminal on the other side of a communication.

According to a fifth aspect there is provided a program causing a computer controlling a communication terminal, to execute: communicating with a base station; communicating with a slave communication terminal; determining whether a communication between the slave communication terminal and the base station is allowed or not, according to notification information received from the base station; and instructing to the slave communication terminal to perform a communication between the slave communication terminal and the base station, when it is determined that the slave communication terminal and the base station communicate. This program can be recorded in a computer-readable (non-transient) storage medium. Namely, the present invention can be embodied as a computer program product.

### ADVANTAGEOUS EFFECTS OF INVENTION

According to each aspect of the present invention, a communication terminal, a communication system, a method for controlling a communication terminal, and a program that contributes to minimizing unnecessary communication with a base station while receiving necessary information for a user are provided.

### BRIEF DESCRIPTION OF THE DRAWINGS

Fig. 1 illustrates a configuration according to an exemplary embodiment of the present invention.
Fig. 2 is a plan view of showing an example of an overall configuration of a communication terminal 1 relating to the exemplary embodiment 1
Fig. 3 is a drawing of showing an example of an overall of configuration of a communication system 2 relating to the exemplary embodiment 1.
Fig. 4 is a drawing of showing an example of the internal configuration of the master communication terminal 3 relating to the exemplary embodiment 1.
Fig. 5 is a drawing of an example of the communication control table.
Fig. 6 is a drawing of an example of the internal configuration of the slave communication terminal 4 relating to the exemplary embodiment 1.
Fig. 7 is a flowchart of an example of showing a process of the preparation stage.
Fig. 8 is a flowchart of an example of a process of the standby stage.
Fig. 9 is a flowchart of an example of determination process of whether a communication between the slave communication terminal and the base station 6 is allowed or not.
Fig. 10 is a flowchart of an example of a communication process on the slave communication terminal 4 and the base station 6.
Fig. 11 is a drawing of an example of an overall configuration of the communication system 2 relating to the exemplary embodiment 2.
Fig. 12 is a drawing of an example of an internal configuration of the master/slave communication terminal 7 relating to exemplary embodiment 2.
Fig. 13 is a drawing of an example of switch terminal information.

### MODES FOR CARRYING OUT THE INVENTION

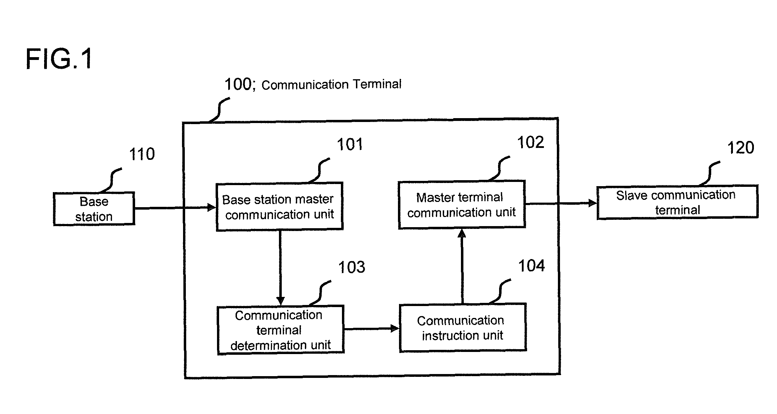

First, an outline of an exemplary embodiment of the present invention will be described with reference to Fig. 1. In the following outline, various components are denoted by reference characters for the sake of convenience of understanding, not to limit the present invention to the illustrated modes.

As described above, a user sometimes uses a different communication device according to their purposes. However, even if a communication between a communication terminal and a base station is not necessary, the communication terminal sometimes keeps communicating with the base station. Therefore, it is desired to provide a communication terminal that contributes to minimizing unnecessary communication with a base station while receiving necessary information for a user.

Here, a communication terminal 100 shown in Fig. 1 is provided as an example. A communication terminal comprises a base station master communication unit 101 that communicates with the base station; a master terminal communication unit 102 that communicates with a slave communication terminal 120; a communication determination unit 103 that determines whether a communication between the slave communication terminal 120 and the base station 110 is allowed or not, according to notification information that the base station master communication unit 101 receives from the base station 110; and a communication instruction unit 104 that instructs to the slave communication terminal 120 to perform a communication between the slave communication terminal 120 and the base station 110, when the communication terminal determination unit 103 determines that the slave communication terminal 120 and the base station 110 communicate.

The communication terminal 100 communicates with the base station 110 and receives the notification information from the base station 110. For example, the notification information is information to notify to a communication terminal a presence of receiving a signal, etc.. Then, according to notification information received by the base station 110, the communication terminal 100 determines whether the slave communication terminal 120 and the base station 110 is allowed or not. Namely, the communication terminal 100 determines whether or not to allow the slave communication terminal 120 to communicate with the base station 110.

Then, when the communication terminal 100 allows that the slave communication terminal 120 and the base station 110 communicate, the communication terminal 100 instructs to the slave communication terminal 120 to communicate with the base station 110. Namely, the communication terminal 100 controls a communication between the slave communication terminal 120 and the base station 110. Therefore, the communication terminal can contribute to minimizing unnecessary communication with a base station while receiving necessary information for a user.

Concrete exemplary embodiments will be described below in more detail with reference to the drawings.

### [Exemplary Embodiment 1]

A first exemplary embodiment will be described in more detail with reference to the drawings.

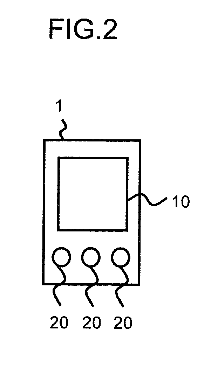

Fig. 2 is a plan view of showing an example of an overall configuration of a communication terminal 1 relating to the present exemplary embodiment.

The communication terminal 1 (corresponding to the communication terminal 100 and the slave communication terminal 120 described above) comprises a display unit 10 and an operation unit 20. Note that Fig. 2 does not aim to limit the communication terminal 1 relating to the present exemplary embodiment to an embodiment shown in Fig. 2. For example, the communication terminal 1 may be a smartphone, a mobile phone, a game device, a tablet PC (Personal Computer), a note PC, a PDA (Personal Data Assistants).

A user visually recognizes information (characters, pictures, etc.) that the communication terminal 1 displays by the display unit 10. Further, it is preferred that display unit 10 is a crystal liquid panel, an organic EL (Electro Luminescence) panel, etc..

The operation unit 20 inputs a user's operation. The operation unit 20 may be a hard key, a touch sensor, etc.. There are various methods to embody the operation unit 20, but any method can be used.

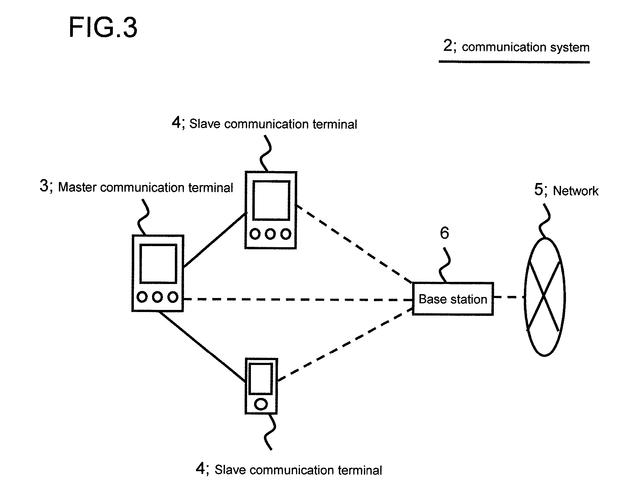

Fig. 3 is a drawing of showing an example of an overall of configuration of a communication system 2 relating to the present exemplary embodiment. The communication system 2 comprises a master communication terminal (corresponding to the communication terminal described above) 3 and a slave communication terminal 4. In the following description, according to roles of the communication terminal 1 in the communication system 2, the communication terminal 1 is referred to as the master communication terminal 3 or the slave communication terminal 4.

The master communication terminal 3 and the slave communication terminal 4 connect to a network 5 via a base station 6.

The network 5 includes networks such as a mobile phone line, an internet, LAN (Local Area Network), etc. There are various type of the mobile phone line, such as 3G line, 4G line, LTE (Long Term Evolution), etc., but any type can be used. Also, there are various type of the LAN, such as a WiFi (Wireless Fidelity), WiMax (Worldwide Interoperability for Microwave Access), etc., but any type can be used. Further, in the LAN (including the WiFi, WiMax, etc.), a communication is performed via an access point, but in the following description, the base station 6 includes the access point.

Furthermore, the master communication terminal 3 communicates with the slave communication terminal 4. As shown in Fig. 3, the master communication terminal may communicate with more than 2 slave communication terminals 4. Note that, in the following description, the state where the slave communication terminal 4 cannot communicate with the base station 6 is referred to as an OFF state of transmission of a radio wave. Further, the state where the slave communication terminal 4 can communicate with the base station 6 is referred to as an ON state of transmission of a radio wave.

Next, a master communication terminal in detail will be described.

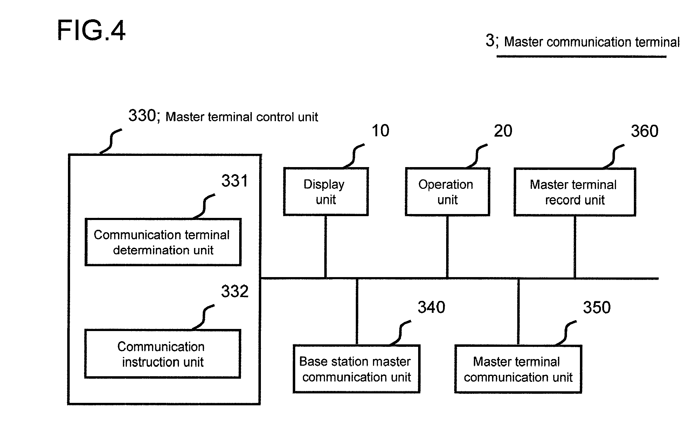

Fig. 4 is a drawing of showing an example of the internal configuration of the master communication terminal 3. The master communication terminal 3 comprises the display unit 10, the operation unit 20, a master communication control unit 330, a base station master communication unit 340, a master terminal communication unit 350, and a master terminal record unit 360. The master terminal control unit 330 comprises a communication terminal determination unit 331 and a communication instruction unit 332. For simplicity, Fig 4 only shows modules relevant to the master communication terminal 3 relating to the present exemplary embodiment. Note that the display unit 10 and the operation unit 20 are the same as described above, and the more explanation will be omitted.

The master terminal control unit 330 controls the whole of the master communication terminal 3, and each module shown in Fig. 4. The master terminal control unit 330 can be embodied by a computer program to make a computer mounted on the master communication terminal 3 unit execute processes of the master terminal control unit 330 using the hardware of the computer.

The base station master communication unit 340 communicates with the base station 6. Concretely, the base station master communication unit 340 receives notification information from the base station 6. For example, the notification information includes receiving information, updating information of an application, etc.. Concretely, the base station master communication unit 340 may receive information such as receiving a voice information, receiving a electric mail information, etc.. And, for example, the base station master communication unit 340 may receive updating information of a SNS (Social Networking Service) and a blog, etc..

The communication terminal determination unit 331 determines whether the slave communication terminal 4 and the base station 6 communicate or not, according to the notification information that the base station master communication unit 340 receives from the base station 6. Concretely, when the communication terminal determination unit 331 receives the notification information from the base station 6, the communication terminal determination unit 331 determines whether or not that the slave communication terminal 4 receives receiving information, based on a communication control table.

The communication control table is a table associating a type of information, that the slave communication terminal 4 receives from the base station 6, with information indicative of whether a communication between the slave communication terminal 4 and the base station 6 is allowed or not. It is preferred that the master terminal record unit 360 records the different communication control table according to each communication terminal, regarding the communication between the slave communication terminal 4 and the base station 6.

When the communication instruction unit 332 determines that the slave communication terminal 4 and the base station 6 communicate, the communication instruction unit 332 instructs to the slave communication terminal 4 to perform a communication with the base station 6. Concretely, when the communication determination unit 331 determines that the slave communication terminal 4 and the base station 6 communicate, the communication instruction unit 332 instructs to the slave communication terminal 4 to transit an ON state of transmission of a radio wave. Namely, in the communication system 2 relating to the present exemplary embodiment, the slave communication terminal 4 switches an ON/OFF state of transmission of a radio wave, based on an instruction from the communication instruction unit 332.

Further, the communication instruction unit 332 notifies a type of information to be received by the slave communication terminal 4. For example, when the base station master communication unit 340 receives a notification of receiving an electric mail from the base station 6, the communication instruction unit 332 instructs to receive the electric mail to the slave communication terminal 4. And, when the base station master communication unit 340 receives a notification of receiving an electric mail from the base station 6, the communication instruction unit 332 instructs to respond to a telephone to the slave communication terminal 4.

The master terminal communication unit 350 communicates with the slave communication terminal 4. Concretely, the master terminal communication unit 350 receives the communication control table, information of state of the communication with the base station 6, etc. from the slave communication terminal. Further, the communication instruction unit 332 transmits an instruction of the communication between the slave communication terminal 4 and base station 6, etc. to the slave communication terminal 4 via the master terminal communication unit 350.

Here, the master communication terminal 3 communicates with the slave communication terminal 4 via a short-distance wireless communication. Namely, the master communication terminal 3 communicates with the slave communication terminal 4 not via the base station 6. Therefore, the slave communication terminal 4 can communicate with the master communication terminal, even if the slave communication terminal 4 cannot communicates with the base station 6. Further, there are various methods of short-distance wireless communication, but any method can be used.

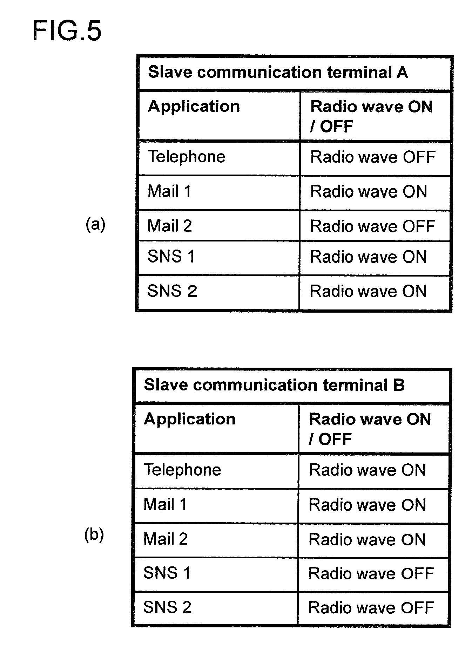

Fig. 5 is a drawing of an example of the communication control table. Concretely, Fig. 5(a) shows the communication control table regarding a slave communication terminal A. On the other hand, Fig. 5(b) shows the communication control table regarding a slave communication terminal B. Note that, in Fig. 5, for example, a Mail 1 and a Mail 2 mean respectively an electric mail with different destination.

First, Fig. 5(a) shows that the slave communication terminal A receives information regarding "Mail 1", "SNS 1" and "SNS 2" from the base station 6. Namely, Fig. 5(a) shows that the slave communication terminal A is put on an ON state of transmission of a radio wave, when the base station master communication unit 340 receives these notification information.

On the other hand, Fig. 5(a) shows that the slave communication terminal A does not receive information regarding "Telephone" and "Mail 2" from the base station 6. Namely, Fig. 5(a) shows that the slave communication terminal A is put on an OFF state of transmission of a radio wave, even if the base station master communication unit 340 receives these notification information.

And, Fig. 5(b) shows that the slave communication terminal B receives information regarding "Telephone", "Mail 1" and "Mail 2" from the base station 6. On the other hand, Fig.5 (b) shows that the slave communication terminal B does not receive information regarding "SNS 1" and "SNS 2".

The master terminal record unit 360 records the communication control table, information regarding a state of the communication between the slave communication terminal 4 and the base station 6, and a state of a communication between the master communication terminal 3 and the slave communication terminal, etc.. Further, it is natural that the master communication record unit 360 records information such as a program, etc. to operate the mater communication terminal 3.

Next, a slave communication terminal in detail will be described.

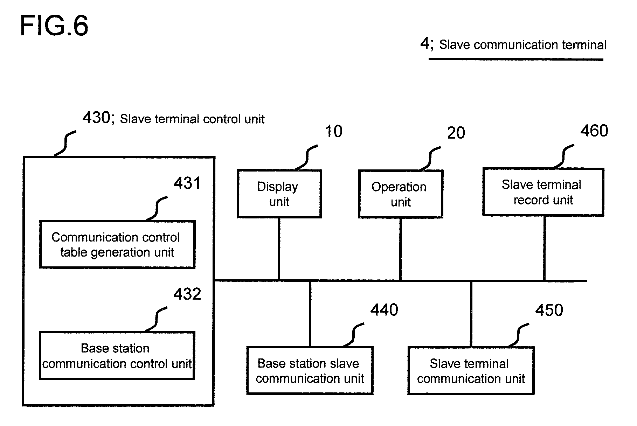

Fig. 6 is a drawing of an example of the internal configuration of the slave communication terminal 4. The slave communication terminal 4 comprises a display unit 10, an operation unit 20, a slave terminal control unit 430, a base station slave communication unit 440, a slave terminal communication unit 450, and a slave terminal record unit 460. The slave terminal control unit 430 comprises a communication control table generation unit 431 and a base station communication control unit 432. For simplicity, Fig 6 only shows modules relevant to the slave communication terminal 4 relating to the present exemplary embodiment.

The slave terminal control unit 320 controls the whole of the slave communication terminal 4 and each module shown Fig. 6. The slave terminal control unit 430 can be embodied by a computer program to make a computer mounted on the slave communication terminal 4 execute processes of the slave terminal control unit 430 using the hardware of the computer.

The communication control table generation unit 431 generates a communication control table regarding the slave communication terminal 4. For example, the communication control table generation unit 431 generates the communication control table associating information indicative of whether a communication between the slave communication terminal 4 and the base station 6 is allowed or not, according to an application.

And, the slave communication terminal 4 displays an edit screen image of a communication control table on the display unit 10. In that case, the communication control table generation unit 431 updates the communication control table based on an operation for the edit screen image by a user. Namely, the user may set reception of information indicative of whether information from the base station 6 is allowed or not, according to a type of information.

The base station communication control unit 432 controls whether the slave communication terminal 4 and the base station 6 communicate or not. Concretely, when the base station communication control unit 432 receives an instruction of the communication with the base station 6 from the master communication terminal, the base station communication control unit 432 starts communicating with the base station 6 via the station slave communication unit 440. Namely, when the base station communication control unit 432 receives an instruction of the communication between the slave communication terminal 4 and the base station 6 from the master communication terminal 3, a state of transmission of a radio wave is transited to an ON state of transmission of a radio wave. Therefore, the slave communication terminal 4 keeps an OFF state of transmission of a radio wave until the slave communication terminal 4 receives the instruction of the communication between the slave communication terminal 4 and the base station 6 from the master communication terminal 3.

On the other hand, when the base station communication unit 440 finishes receiving information from the base station 6, the base station communication control unit 432 transits to an OFF state of transmission of a radio wave. Namely, the slave communication terminal 4 relating to the present exemplary embodiment transits from an OFF state to an ON state of transmission of a radio wave according necessities. Further, after a predetermined process is finished, the slave communication terminal 4 relating to the present exemplary embodiment transits from an ON state to an OFF state of transmission of a radio wave. Therefore, the slave communication terminal 4 relating to the present exemplary embodiment can contribute to preventing from consuming unnecessary electric powers.

The base station slave communication unit 440 communicates with the base station 6. The base station slave communication unit 440 receives information, which is instructed from the master communication terminal to be received, from the base station 6.

The slave terminal communication unit 450 communicates with the master communication terminal 3. Concretely, the slave terminal communication unit 450 transmits the communication control table, information relating to a state of communication of the base station 6, etc. to the master communication terminal 3. Further, the slave terminal communication unit 450 receives an instruction of a communication between the communication terminal and the base station 6 according to information that the base station master communication unit 340 has received.

The slave terminal record unit 460 records information regarding a state of a communication between the slave communication terminal 4 and the base station, and information regarding a state of a communication between the communication terminal and the master communication terminal 6. And, the slave terminal record unit 460 may record a presence of activation of application on receiving information from the base station 6. Further, it is natural to record information such as a program, etc. to operate the slave communication terminal 4.

Next, a communication system 2 relating to the present exemplary embodiment in detail will be described.

In the following description, for explanation, let's explain by dividing a process stage of the communication system 2 with a "preparation stage", a "standby stage", and a "communication stage". Note that it does not aim to limit the process stage of the communication system 2 in the 3 types.

First, the preparation stage will be described. In the preparation stage, the slave communication terminal 4 generates the communication control table.

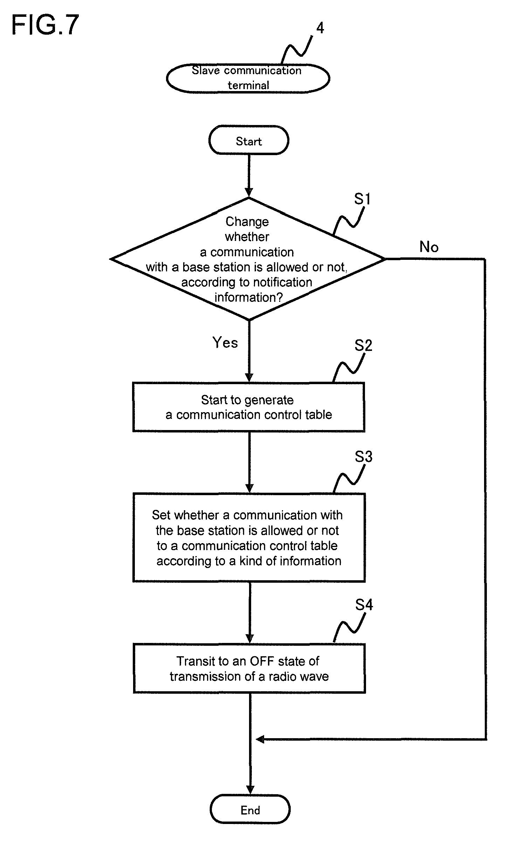

Fig. 7 is a flowchart of an example of showing a process of the preparation stage.

In step S1, the base station communication control unit 432 determines whether or not the slave communication terminal 4 changes whether the communication between with the base station 6 is allowed or not, according to the notification information. When the slave communication terminal 4 changes whether the communication with the base station 6 is allowed or not, according to the notification information (Yes in the step S1), the process proceeds to step S2. When the slave communication terminal 4 does not change whether the communication with the base station 6 is allowed or not, according to the notification information (No in the step S1), the slave communication terminal 4 finishes a process of generating the communication control table.

Next, in the step S2, the communication control table generation unit 431 starts to generate the communication control table. Here, the communication control table generation unit 431 may display an edit screen image of the communication control table to the display unit 10. In that case, it is preferred that a user operates the edit screen image, and sets whether the communication with the base station 6 is allowed or not, according to a type of the information.

Next, in step S3, the communication control table generation unit 431 sets to the communion control table whether the communication with the base station 6 is allowed or not, according to the type of the information. In step S4, the slave terminal control unit 430 makes the slave communication terminal 4 transit to an OFF state of transmission of a radio wave.

Next, the standby stage will be described. On the standby stage, the slave communication terminal 4 is on an OFF state of transmission of a radio wave.

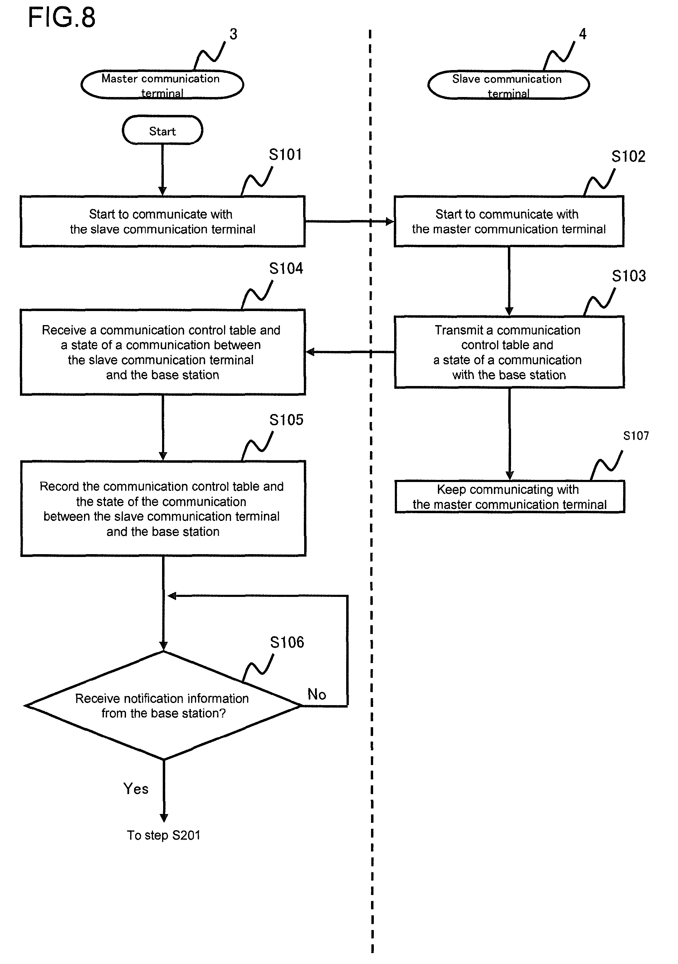

Fig. 8 is a flowchart of an example of a process of the standby stage.

In step S101, the master terminal communication unit 350 starts a communication with the slave communication terminal 4. For example, it is preferred that the master terminal communication unit 350 starts to communicate with the slave communication terminal 4 based on a user's operation for the master communication terminal 3. And, when master terminal communication unit 350 starts to communicate with the slave communication terminal 4, the master terminal communication unit 350 transmits a communication request signal to the slave communication terminal 4. Then, the master terminal communication unit 350 stands by until receiving a response signal from the slave communication terminal 4.

And, in step S102, the slave terminal communication unit 450 starts to communicate with the master communication terminal 3. For example, it is preferred that the slave terminal communication unit 450 starts to communicate with the master communication terminal 3 based on a user's operation for the slave communication terminal 4. And, when the slave terminal communication unit 450 starts to communicate with the master communication terminal 3, the slave terminal communication unit 450 stands by receiving the communication request signal form the master communication terminal 3. Namely, it is preferred that a user respectively performs an operation of starting a communication for the master communication terminal 3, and the slave communication terminal 4.

And, when the slave terminal communication unit 450 receives the communication request signal form the master communication terminal 3, the slave terminal communication unit 450 determines that the communication with the master communication terminal 3d is succeed. And, the slave terminal communication unit 450 returns a response signal to the master communication terminal 3. On the other hand, when the master terminal communication unit 350 receives the response signal from the slave communication terminal 4, the master terminal communication unit 350 determines that a communication with the slave communication terminal 4 is succeed.

And, when the master terminal communication unit 350 cannot receive the response signal from the slave communication terminal 4 within a predetermined time (for example, 5 minutes) after transmitting the communication request signal, the master terminal communication unit 350 may determines that a communication with the slave communication terminal 3 is failed. On the other hand, when the slave terminal communication unit 450 cannot receive the communication request signal from the master communication unit 3 within a predetermined time (for example, 5 minutes) after starting of standing by of receiving the communication request signal, the slave terminal communication unit 450 may determine that a communication with the master communication terminal 3 is failed.

When the master communication terminal 3 and the slave communication terminal 4 have been failed to communicate, the master communication terminal 3 and the slave communication terminal 4 may notify to a user that a communication is failed. And, after a predetermined time (for example, 1 minute) is passed, the slave communication terminal 450 may try again to communicate with the master communication terminal 3. On the other hand, the master terminal communication unit 350 may try again to communicate with the slave communication terminal 4. Or, when the master communication terminal 3 and the slave communication terminal 4 have been failed to communicate, the communication control table generation unit 431 may determines that generating of the communication control table is failed.

Or, the master communication terminal 3 and the slave communication terminal 4 may comprise a selection screen image for selecting a process to be performed on failed to communicate. For example, on the master communication terminal 3, the process to be performed on failed to communicate may be a process such that the master terminal communication unit 350 tries again to communicate. On the other hand, for example, on the slave communication terminal 4, the process to be performed on failed to communicate may be a process such that the slave terminal communication unit 450 tries again to communicate, or the communication control table generation unit 431 determines that generating the communication control table is failed. Further, a user may select a process to be performed on a failure of communication on the master communication terminal 3 and the slave communication terminal 4 by using the selection screen image.

In step S103, the slave terminal communication unit 450 transmits the communication control table and a state of the communication with the base station 6. And, the slave terminal communication unit 450 keeps communicating with the master communication terminal 3 (Step S107).

And, in step S104, the master terminal communication unit 350 receives the communication control table and a state of a communication between the slave communication terminal 4 and the base station 6. In step S105, the master terminal record unit 360 records the communication control table and a state of a communication between the slave communication terminal 4 and the base station 6.

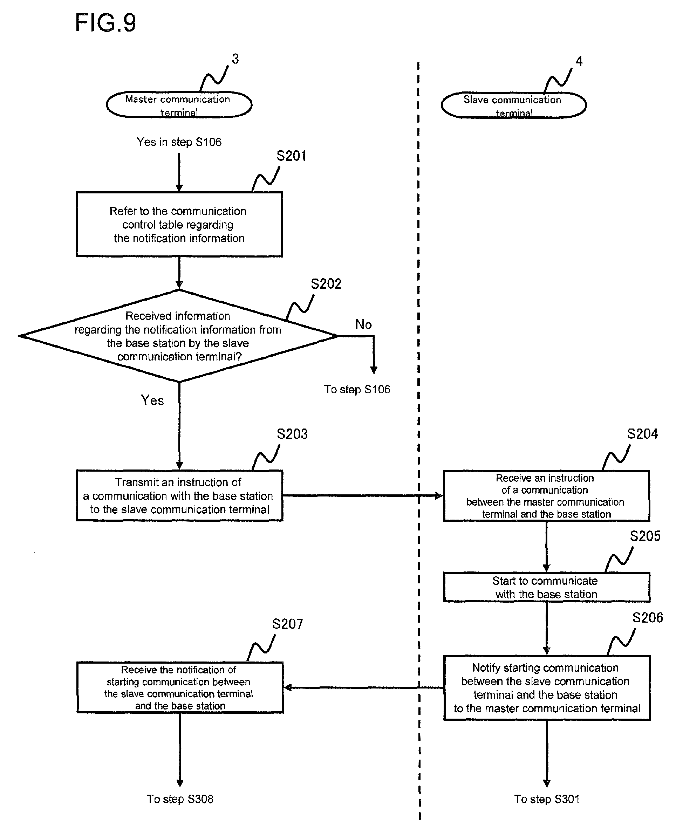

In step S106, the base station master communication unit 340 determines whether or not to receive the notification information from the base station 6. When the base station master communication unit 340 receives the notification information receives from the base station 6 (Yes in the step S106), the process proceeds to step S109 shown in Fig. 9. When the base station master communication unit 340 does not receive the notification information receives from the base station 6 (No in the step S106), the process proceeds to step the S106, and the process is continuing.

Next, the communication step is described. In the communication step, the master communication terminal 3 determines whether the communication between the slave communication terminal 4 and the base station 6 is allowed or not. Further, when the slave communication terminal 4 communicates with the base station 6, the slave communication receives information from the base station 6.

Fig. 9 is a flowchart of an example of determination process of whether a communication between the slave communication terminal and the base station 6 is allowed or not.

In step S201, the communication terminal determination unit 331 refers to the communication control table about the notification information. In step S202, the communication terminal determination unit 331 determines whether or not the slave communication terminal receives information regarding the notification information from the base station 6. Concretely, the communication terminal determination unit 331 determines whether or not the slave communication terminal 4 is set on the communication control table to communicate with the base station regarding receiving information.

When the slave communication terminal 4 receives the information from the base station 6 (Yes in the step S202), the process proceeds to step S203. When the slave communication terminal 4 does not receive the information from the base station 6 (No in the step S202), the process proceeds to the step S106, and the process is continuing.

In the step S203, the communication instruction unit 332 transmits to the slave communication terminal 4 an instruction of a communication with the base station 6.

In step S205, the base station communication control unit 432 starts to communicate with the base station 6 via the base station slave communication unit 440. Concretely, the base station communication control unit 432 transits to an ON state of transmission of a radio wave, and starts to communicate with the base station 6 via the base station slave communication unit 440.

In step S206, the slave terminal communication unit 450 notifies to the master communication terminal 3 to start a communication between the slave communication terminal 4 and the base station 6.

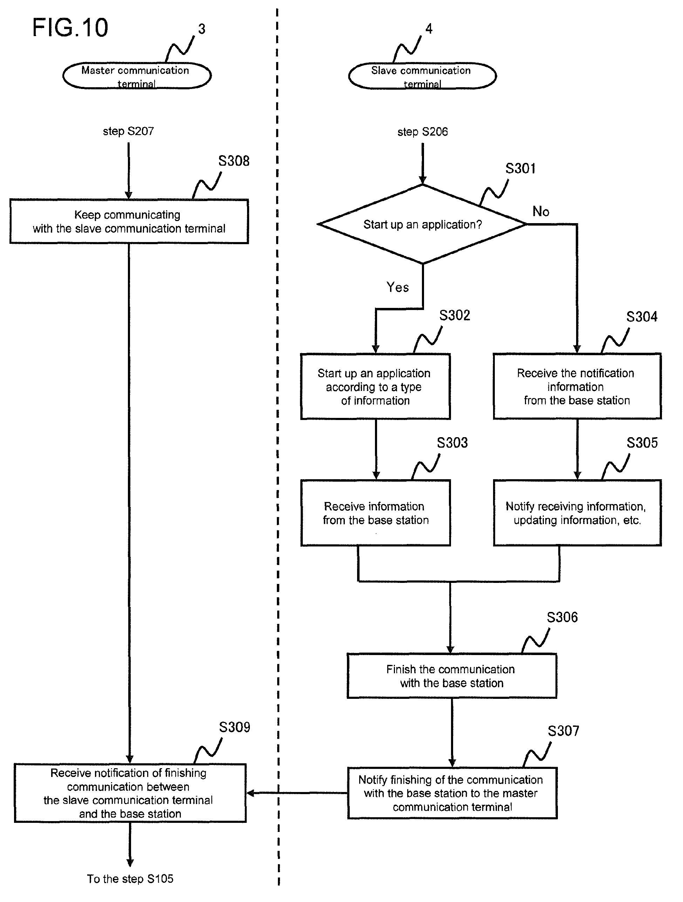

Fig. 10 is a flowchart of an example of a communication process on the slave communication terminal 4 and the base station 6.

First, processes on the slave communication terminal will be described.

In step S301, the slave terminal control unit 430 determines whether or not to start up an application. When the slave terminal control unit 430 starts up the application (Yes in the step S301), the process proceeds to step S302. When the slave terminal control unit 430 does not start up the application (No in the step S301), the process proceeds to step S304.

For example, the slave communication terminal 4 may display a selection screen image regarding the application's starting up. And, a user may select whether or not to start up the application by using the selection screen image displayed on the display unit 10.

In the step S302, the slave terminal control unit 430 starts up the application according to a type of information. For example, when receiving information of an electric mail is received from the master communication terminal, a mail application is started up. Or, updating information of a SNS is received from the master communication terminal 4, a Web browser is started up. And, the base station slave communication unit 440 receives information from the base station 6 (step S303). Then, the process proceeds to step S306.

In the step S304, the base station slave communication unit 440 receives the notification information. And, the slave terminal control unit 430 notifies the receiving information, the updating information, etc. (step S305). For example, the slave terminal communication unit 430 may display captions such as "there is a new mail." on the display unit 10. And, the process proceeds to step S306.

In the step S306, the base station communication control unit 432 finishes the communication with the base station 6. Concretely, the base station communication control unit 432 transits to an OFF state of transmission of a radio wave, and finishes the communication with the base station 6. In the step S302, if the application has been started up, the base station communication unit 432 may transit to the OFF state of transmission of a radio wave, when the application is finished. And, in step S307, the slave terminal communication unit 450 notifies to the master communication terminal 3 finishing of the communication with the base station 6.

On the other hand, after the process of the step S207 shown in Fig. 9, the master communication terminal 3 keeps communicating with the slave communication terminal 4 (step S308). And, when the maser communication terminal 3 receives the notification of finishing the communication between the slave communication terminal 4 and the base station 6 (step S309), the process proceeds to the step S105 shown in Fig. 8.

Further, it is preferred that the communication instruction unit 332 does not instruct to the slave communication terminal 4 with an ON state of transmission of a radio wave to communicate. Namely, when the slave communication terminal 4 transits to an ON state of transmission of a radio wave, it is preferred that the communication instruction unit 332 does not instruct a communication even if the updating information has been received.

### [Modification 1]

In the above exemplary embodiment 1, when the master communication terminal 3 receives information from the base station 6, the master communication terminal 3 instructs a communication to the slave communication terminal 4 based on the communication control table. However, in this case, it is necessary for the slave communication terminal to keep communicating with the master communication terminal 3.

Therefore, as a modification 1 of the exemplary embodiment 1, for un-readiness information, the master communication terminal 3 may communicate with the slave communication terminal 4 on predetermined periodic time (for example, 1 hour). Namely, for the un-readiness information, when a setting to be communicated between the slave communication terminal 4 and the base station 6 is active, the slave communication terminal 4 may communicate with the master communication terminal 3 on predetermined periodic time (for example, 1 hour). Further, for example, un-readiness information includes receiving information of an electronic mail, and updating information of a SNS. On the other hand, for example, readiness information includes receiving information of a telephone call.

### [Modification 2]

As a modification 2 of the exemplary embodiment 1, the slave terminal record unit 460 may record the communication control table. In that case, the slave communication terminal 4 receives the notification information from the master communication terminal 3, and determines whether or not to receive information from the base station 6.

Concretely, when the master communication terminal 3 receives the notification information from the base station 6, the master communication terminal 3 transmits the notification information to the slave communication terminal 4. And, the base station communication terminal control unit 432 determines whether or not to receive information from the base station 6 based on the received notification information. And, when the base station communication control unit 432 receives information from the base station 6, the base station communication control unit 432 transits to an ON state of transmission of a radio wave. Therefore, in the communication system 2 relating to the modification 2 of the exemplary embodiment 1, loads of the master communication terminal 3 can be distributed to the slave communication terminal 4.

As described above, in the communication system 2 relating to the present exemplary embodiment, when the slave communication terminal 4 receives an instruction of a communication from the master communication terminal 3, the slave communication terminal 4 communicates with the base station 6. Therefore, in the communication system 2 relating to the present exemplary embodiment, an unnecessary communication between the slave communication terminal 4 and the base station 6 is minimized. Hence, the communication system 2 relating to the present exemplary embodiment contributes to minimizing unnecessary communication with a base station while receiving necessary information for a user.

### [Exemplary Embodiment 2]

In the followings, an exemplary embodiment 2 will be described in more detail with reference to the drawings.

As described above, a communication frequency between the master communication terminal 3 and the base station 6 is more than a communication frequency between the slave communication terminal 4 and the base station 6. And, a consuming electric power for a communication with the base station 6 is larger than a consuming electric power for a short-distance communication. The consuming electric power for the short-distance communication is a consuming electric power for communication between the master communication terminal 3 and the slave communication terminal 4. Therefore, a consuming electric power of the master communication terminal 3 is larger than that of the slave communication terminal 4.

Therefore, in a communication system 2a relating to the exemplary embodiment 2, a function(s) of the master communication terminal 3 switches with a function(s) of the slave communication terminal 4. Note that the description that overlaps with the exemplary embodiment 1 will be omitted in the description of the present exemplary embodiment. Further, the same signs are given to the elements same as those in the exemplary embodiment 1 and the explanation will be omitted in the description of the present exemplary embodiment.

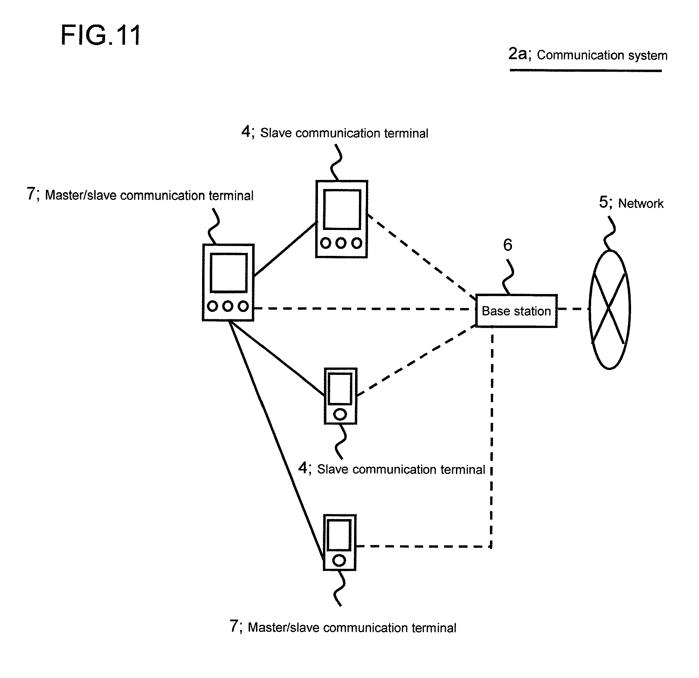

Fig. 11 is a drawing of an example of an overall configuration of the communication system 2 relating to the present exemplary embodiment. A difference between Fig. 11 and Fig.3 is a point that a master/slave communication terminal 7 is included.

The master/slave communication terminal 7 is a communication terminal comprising both functions of the master communication terminal 3 and the slave communication terminal 4 relating to the exemplary embodiment 1. Therefore, in the communication system 2a relating to the present exemplary embodiment, the master/slave communication terminal 7 can take a role of master communication terminal 3 or a role of the slave communication terminal 4.

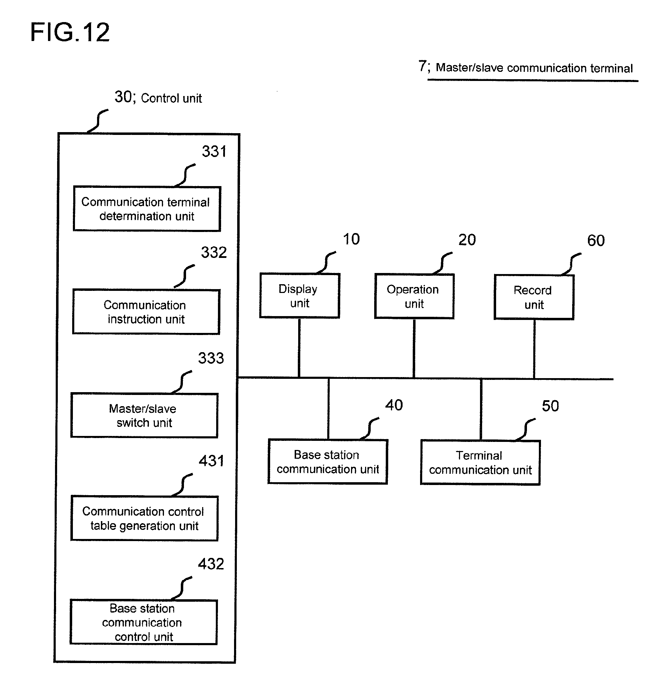

Fig. 12 is a drawing of an example of an internal configuration of the master/slave communication terminal 7. The master/slave communication terminal 7 comprises a display unit 10, an operation unit 20, a control unit 30, a base station communication unit 40, a terminal communication unit 50, and a record unit 60.

The control unit 30 controls the whole of the master/slave communication terminal 7, and each module shown in Fig. 12. The control unit 30 comprises a communication terminal determination unit 331, a communication instruction unit 332, a master/slave switch unit 333, a communication control table generation unit 431, and a base station communication control unit 432. For simplicity, Fig. 12 only shows modules relevant to the master/slave communication terminal 7 relating to the present exemplary embodiment.

The control unit 30 can be embodied by a computer program to make a computer mounted on the master/slave communication terminal 7 execute processes of the control unit 30 using the hardware of the computer.

The base station communication unit 40 communicates with the base station 6. Concretely, the base station communication unit 40 performs an operation equivalent to the base station master communication unit 340, or the base station slave communication unit 440 according to a role of a communication terminal in the communication system 2.

The terminal communication unit 50 communicates with a communication terminal on the other side of a communication via a short-distance wireless communication. Concretely, the terminal communication unit 50 performs processes relevant to the master terminal communication unit 350, or the slave terminal communication unit 450 according to a role of a communication terminal in the communication system 2.

The record unit 60 records information such as a program, etc. to make the master/slave communication terminal 7 operate. And, the record unit 60 records information stored in the master terminal record unit 360, and information stored in the slave terminal record unit 460. Further, it is preferred that the record unit 60 records information (in the following, it is referred to as switch terminal information) to identify whether or not it is the master/slave communication terminal 7.

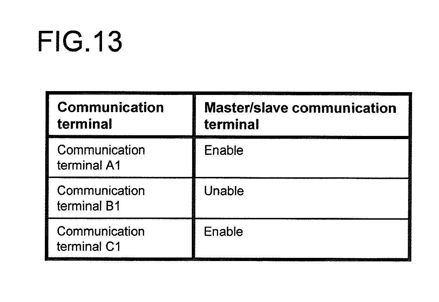

Fig. 13 is a drawing of an example of the switch terminal information. In the case shown in Fig. 13, a communication terminal A1, and a communication terminal C1 can switch a role between that of the master communication terminal 3 and that of a slave communication terminal 4. On the other hand, a communication terminal B1 cannot switch a role between that of the master communication terminal 3 and that of a slave communication terminal 4.

The master/slave switch unit 333 switches a role between that of the master communication unit 3 and that of the slave communication unit 4. Concretely, it is preferred that the master/slave switch unit 333 switches a role between that of the master communication unit 3 and that of the slave communication unit 4, based on the switch terminal information. Or, the master/slave switch unit may ask to a communication terminal on the other side of a communication whether the communication terminal comprises a function(s) of the master communication terminal. Further, when remaining charge amount on a communication terminal on the other side of a communication is less than a predetermined electric power, it may be possible that the master/slave switch unit 333 does not switch a role of the master communication terminal 3 for the communication terminal.

And, on a plurality of the master/slave communication terminals 7, the master/slave switch unit 333 may switch a role between that of the master communication terminal 3 and that of a role of the slave communication terminal on predetermined periodic time (for example, 1 hour). Or, on the plurality of the master/slave communication terminals 7, the master/slave switch unit 333 may switch a role of the master communication terminal 3 in a predetermined sequence.

### [Modification 1]

As a modification 1 of the exemplary embodiment 2, the master/slave communication terminal 7 may switch a role between that of the master communication terminal 3 and that of the slave communication terminal based on remaining change amount. Concretely, when the remaining change amount on the master communication terminal 3 is less than a predetermined value, the master/slave communication terminal may switch a role between that of the master communication terminal 3 and that of the slave communication terminal 4.

As described above, in the communication system 2a relating to the present exemplary embodiment, a plurality of communication terminals switch a role between that of the master communication terminal 3 and that of the slave communication terminal 4. As described above, the consuming electric power of the master communication terminal 3 is more than the consuming electric power of the slave communication terminal 4. Therefore, by switching a role between that of the master communication terminal and that of the slave communication terminal, it can be prevent form increasing a consuming electric power on a particular communication terminal. And, by taking a role by the master communication terminal 3, time to realize a relationship between the master communication terminal 3 and the slave communication terminal 4 becomes longer.

A part of/a whole of the above exemplary embodiment can be described as the following modes, but not limited to the following modes.

### (Mode 1)

As a communication terminal relating to the first aspect.

### (Mode 2)

The communication terminal according to Mode 1, wherein the communication instruction unit that instructs to the slave communication terminal to transit to an ON state of transmission of a radio wave, when the communication terminal determination unit determines that the slave communication terminal and the base station communicate.

### (Mode 3)

As a communication terminal relating to the second aspect.

### (Mode 4)

The communication terminal according to Mode 3, comprising: a communication control table generation unit that generates a communication control table associating a type of information received from a base station with information indicative of whether reception of information by the communication terminal is allowed or not; wherein the slave terminal communication unit transmits the communication control table to the master communication terminal.

### (Mode 5)

The communication terminal according to Mode 3 or 4, wherein the base station communication control unit keeps an OFF state of transmission of a radio wave until the instruction of the communication between the communication terminal and the base station is received from the master communication terminal.

### (Mode 6)

As a communication system relating to the third aspect.

### (Mode 7)

The communication system according to Mode 6, comprising: a master/slave communication terminal comprising a master/slave switch unit that switches a role of the master communication terminal with a role of the slave communication terminal.

### (Mode 8)

The communication system according to Mode 7, wherein the slave communication terminal comprises a communication control table generation unit that generates a communication control table associating a type of information received from a base station with the information indicative of whether reception of information by the communication terminal is allowed or not; the slave terminal communication unit transmits the communication control table to the master communication terminal; and when notification information is received from the base station, the communication terminal determination unit determines whether or not the slave communication terminal receives information on the notification information based on the communication control table.

### (Mode 9)

A method for controlling communication terminal relating to the fourth aspect.

### (Mode 10)

The method for controlling communication terminal according to Mode 9, comprising instructing to the slave communication terminal to transit to an ON state of transmission of a radio wave, when it is determined that the communication between the slave communication terminal and the base station communicate.

### (Mode 11)

A method for controlling communication terminal, comprising: communicating with a base station; communicating with a master communication terminal; and starting the communication with the base station, when an instruction of a communication between the communication terminal and the base station is received.

### (Mode 12)

The method for controlling communication terminal according to Mode 11, comprising: generating a communication control table associating a type of information received from a base station with information indicative of whether reception of information by the communication terminal is allowed or not; wherein the communication control table is transmitted to the master communication terminal.

### (Mode 13)

The method for controlling communication terminal according to Mode 11 or 12, wherein an OFF state of transmission of a radio wave is kept until the instruction of the communication between the communication terminal and the base station is received from the master communication terminal.

### (Mode 14)

A program relating to the fifth aspect.

### (Mode 15)

The program according to Mode 14, comprising instructing to the slave communication terminal to transit to an ON state of transmission of a radio wave, when it is determined that the slave communication terminal and the base station communicate.

### (Mode 16)

A program causing a computer controlling a communication terminal, to execute: communicating with a base station; communicating with a master communication terminal; and starting the communication with the base station, when an instruction of a communication between the communication terminal and the base station is received.

### (Mode 17)

The program according to Mode 16, to execute: generating a communication control table associating a type of information received from a base station with information indicative of whether reception of information by the communication terminal is allowed or not; wherein the communication control table is transmitted to the master communication terminal.

### (Mode 18)

The program according to Mode 16 or 17, wherein an OFF state of transmission of a radio wave is kept until the instruction of the communication between the communication terminal and the base station is received from the master communication terminal.

The disclosure of each of the above Patent Literatures is incorporated herein by reference thereto. Modifications and adjustments of the exemplary embodiments and examples are possible within the scope of the overall disclosure (including the claims) of the present invention and based on the basic technical concept of the present invention. Various combinations and selections of various disclosed elements (including each element in each claim, exemplary embodiment, example, drawing, etc.) are possible within the scope of the claims of the present invention. Namely, the present invention of course includes various variations and modifications that could be made by those skilled in the art according to the overall disclosure including the claims and the technical concept.

### REFERENCE SIGNS LIST

1, 100 communication terminal
2, 2a communication system
3 master communication terminal
4, 120 slave communication terminal
5 network
6, 110 base station
7 master/slave communication terminal
10 display unit
20 operation unit
30 control unit
40 base station communication unit
50 terminal communication unit
60 record unit
101, 340 base station master communication unit
102, 350 master terminal communication unit
103, 331 communication terminal determination unit
104, 332 communication instruction unit
330 master/slave terminal control unit
333 master/slave switch unit
360 master terminal record unit
430 slave terminal control unit
431 communication control table generation unit
432 base station communication control unit
440 base station slave control unit
450 slave terminal communication unit
460 slave terminal record unit

## Claims

1. A communication terminal, comprising:
a base station master communication unit that communicates with a base station;
a master terminal communication unit that communicates with a slave communication terminal;
a communication terminal determination unit that determines whether a communication between the slave communication terminal and the base station is allowed or not, according to notification information that the base station master communication unit receives from the base station; and
a communication instruction unit that instructs to the slave communication terminal to perform a communication between the slave communication terminal and the base station, when the communication terminal determination unit determines that the slave communication terminal and the base station communicate.

2. The communication terminal according to Claim 1, wherein the communication instruction unit that instructs to the slave communication terminal to transit to an ON state of transmission of a radio wave, when the communication terminal determination unit determines that the slave communication terminal and the base station communicate.

3. A communication terminal, comprising:
a base station slave communication unit that communicates with a base station;
a slave terminal communication unit that communicates with a master communication terminal; and
a base station communication control unit that starts the communication with the base station, when an instruction of a communication between the communication terminal and the base station is received.

4. The communication terminal according to Claim 3, comprising:
a communication control table generation unit that generates a communication control table associating a type of information received from a base station with information indicative of whether reception of information by the communication terminal is allowed or not; wherein
the slave terminal communication unit transmits the communication control table to the master communication terminal.

5. The communication terminal according to Claim 3 or 4, wherein
the base station communication control unit keeps an OFF state of transmission of a radio wave until an instruction of a communication between the communication terminal and the base station is received from the master communication terminal.

6. A communication system, comprising:
a master communication terminal;
a slave communication terminal; wherein
the master communication terminal comprises:
a base station master communication unit that communicates with the base station;
a master terminal communication unit that communicates with a slave communication terminal;
a communication terminal determination unit that determines whether the slave communication terminal and the base station is allowed or not, according to notification information that the base station master communication unit receives from the base station; and
a communication instruction unit that instructs to the slave communication terminal to perform a communication between the slave communication terminal and the base station, when the communication terminal determination unit determines that the slave communication terminal and the base station communicate; and, wherein
the slave communication terminal, comprises:
a base station slave communication unit that communicates with a base station;
a slave terminal communication unit that communicates with a master communication terminal; and
a base station communication control unit that instructs the base station slave communication unit to start the communication with the base station, when an instruction of a communication between the slave communication terminal and the base station is received from the master communication terminal.

7. The communication system according to Claim 6, comprising:
a master/slave communication terminal comprising a master/slave switch unit that switches a role of the master communication terminal with a role of the slave communication terminal.

8. The communication system according to Claim 6 or 7, wherein
the slave communication terminal comprises a communication control table generation unit that generates a communication control table associating a type of information received from a base station with information indicative of whether reception of information by the communication terminal is allowed or not;
the slave terminal communication unit transmits the communication control table to the master communication terminal; and
when notification information is received from the base station, the communication terminal determination unit determines whether or not the slave communication terminal receives information on the notification information based on the communication control table.

9. A method for controlling communication terminal, comprising:
communicating with a base station;
communicating with a slave communication terminal;
determining whether a communication between the slave communication terminal and the base station is allowed or not, according to notification information received from the base station;
instructing to the slave communication terminal to perform a communication between the slave communication terminal and the base station, when it is determined that the slave communication terminal and the base station communicate.

10. A program causing a computer, controlling a communication terminal, to execute:
communicating with a base station;
communicating with a slave communication terminal;
determining whether the slave communication terminal and the base station communicate or not, according to notification information received from the base station; and
instructing to the slave communication terminal to perform a communication between the slave communication terminal and the base station, when it is determined that the slave communication terminal and the base station communicate.
